# EUROPÄISCHE PATENTANMELDUNG

(11) **EP 0 756 184 A2**
(43) Veröffentlichungstag der Anmeldung: **29.01.1997**
(21) Anmeldenummer: 96108387.0
(22) Anmeldetag: 25.05.1996
(51) Int. Cl.: G02B 6/34

(54) **Abstimmvorrichtung für ein integriert optisches Vielstrahlinterferometer**

(30) Priorität: 26.07.1995 DE 19527219
(71) Anmelder: ROBERT BOSCH GMBH, 70442 Stuttgart (DE)
(72) Erfinder: Schunk, Nikolaus, 31139 Hildesheim (DE); Rech, Wolf-Henning, 71229 Leonberg (DE)

(57) **Zusammenfassung**

Es wird eine Abstimmvorrichtung für ein integriert optisches Vielstrahlinterferometer vorgeschlagen, bei der eine Elektrodenstruktur für eine Temperaturveränderung in der Wellenleiterebene des Vielstrahlinterferometers dient. Die Größe einer für einen Lichtweg thermisch wirksamen Elektrodenteilfläche steht dabei zu der Länge des Lichtwegs in einem streng monotonen Zusammenhang.

## Beschreibung

### Stand der Technik

Die Erfindung geht aus von einer Abstimmvorrichtung für ein integriert optisches Vielstrahlinterferometer nach dem Oberbegriff des Hauptanspruchs.

Aus dem Aufsatz "Flat-Field Spectrograph in SiO₂/Si", von P.C. Clemens, R. März, A. Reichelt und H.W. Schneider in IEEE Photonics technology letters, vol. 4, no. 8, 1992, Seiten 886f ist ein Vielstrahlinterferometer in Form eines Gitterspektrographen bekannt. Ein solcher Gitterspektrograph weist einen flachen Wellenleiter auf, in den Licht mehrerer Wellenlängen einkoppelbar ist. Dieses Licht wird im Gitterspektrographen an einem Reflexionsgitter reflektiert, wobei eine wellenlängenabhängige Ablenkung der Intensitätsmaxima durch Interferenz erfolgt. Der Gitterspektrograph weist mehrere Photodetektoren auf, die das Licht mehrerer Wellenlängen detektieren.

In der EP 0 565 308 A1 ist ein Array-Demultiplexer beschrieben, bei dem zwischen zwei Sternkopplern eine Reihe von Lichtwellenleitern verschiedener Länge angeordnet ist. Durch die unterschiedlichen Wellenleiterlängen resultiert im ausgangsseitigen Sternkoppler gleichfalls eine Interferenz, die dazu führt, daß ein am Eingang des Array-Demultiplexers anliegendes Wellenlängenmultiplexsignal am Ausgang in einzelne Wellenlängen aufgeteilt wird. Der Array-Demultiplexer ist ebenso als Multiplexer einsetzbar.

In electronics letters, vol. 31, no. 5, 2.3.1995, Seiten 360f ist in dem Aufsatz "10GHz-spaced arrayed-waveguide grating multiplexer with phase-error-compensating thin-film heaters" von Yamada, Takada, Inoue, Hibino und Horiguchi eine Vorrichtung beschrieben, mit der Phasenfehler in einem Array-Multiplexer korrigiert werden können. Dazu weist der Array-Multiplexer über den Wellenleitern Dünnfilmheizvorrichtungen auf, mit denen über den thermooptischen Effekt die optische Länge der Wellenleiter veränderbar ist, wodurch Phasenfehler ausgeglichen werden können. Die Heizelemente weisen dabei für jeden Wellenleiter dieselbe Größe auf.

Des weiteren ist in dem Aufsatz "Tunable phased-array wavelength demultiplexer on InP" von Bissessur, Gaborit, Martin, Ripoche und Pagnod-Rossiaux in electronics letters, vol. 31, no. 1, 5.1.1995 eine Vorrichtung für einen Array-Multiplexer beschrieben, bei der mittels einer Ladungsinjektion eine Abstimmung vorgenommen wird.

### Vorteile der Erfindung

Die erfindungsgemäße Abstimmvorrichtung mit den kennzeichnenden Merkmalen des Hauptanspruchs hat gegenüber der gattungsbildenden, letztgenannten Veröffentlichung den Vorteil, daß durch die Nutzung des thermooptischen Effekts nahezu jedes Material für das Vielstrahlinterferometer genutzt werden kann. Daher ist es dann insbesondere in vorteilhafter Weise möglich, Materialien für das Vielstrahlinterferometer zu verwenden, deren thermooptischer Effekt bezüglich der Brechzahl stark ausgeprägt ist. Der streng monotone Zusammenhang zwischen den thermisch wirksamen Elektrodenteilflächen und den Längen der Lichtwege bewirkt eine höhere Abstimmsteilheit, wodurch mit geringen Temperaturänderungen eine Abstimmung in einem relativ breiten Frequenzbereich erfolgen kann. Außerdem wird durch die Nutzung der thermischen Abstimmung eine geringere Einflußnahme auf den Imaginärteil der Brechzahl ausgeübt, so daß der parasitäre Effekt der Dämpfungsveränderung hier nicht so stark zum Tragen kommt. Zudem wirkt sich der thermooptische Abstimmeffekt stärker auf die Brechzahl aus, als eine Abstimmung über Ladungsträgerinjektion, d.h. es sind höhere Steilheiten der Abstimmung erreichbar.

Durch die in den Unteransprüchen aufgeführten Maßnahmen sind weitere Verbesserungen der im Hauptanspruch angegebenen Abstimmvorrichtung möglich.

Besteht ein monotoner Zusammenhang zwischen der Flächendifferenz der thermisch wirksamen Elektrodenteilflächen und der Längendifferenz der einzelnen Lichtwege, so erhöht sich dadurch in vorteilhafter Weise die Abstimmsteilheit. Um durch die Abstimmung die sonstigen Eigenschaften des Vielstrahlinterferometers, insbesondere die Unterdrückung der unerwünschten Wellenlängen, nicht zu verschlechtern, ist die Wahl eines streng monotonen, insbesondere linearen Zusammenhangs vorteilhaft.

Durch die serielle Hintereinanderschaltung der Elektrodenteilflächen vereinfacht sich die Zuleitung von elektrischem Strom, und gleichzeitig verbessert sich das thermische Verhalten der Elektrode, da die thermischen Wirkungen aufgrund der nur geringen Verbindungswege zwischen den Elektrodenteilflächen nahezu ausschließlich auf die Bereiche unter den Elektrodenteilflächen und damit auf ausgewählte Bereiche über der Wellenleiterebene begrenzt werden.

Es tritt der Vorteil auf, daß sich der Aufwand für die Anbringung und auch die Herstellung der Elektrode vereinfacht, wenn die Elektrodenstruktur im wesentlichen die Form einer geschlossenen Fläche aufweist.

Der Einsatz von Aufdampf- und/oder Photolithographieverfahren sowie der Galvanik eignet sich besonders gut für die Erzeugung der Elektrodenstruktur, da es sich dabei um gut beherrschbare und preiswerte Herstellungsverfahren handelt.

Wenn die Elektrodenstrukturen einen Abstand von ca. 10 - 50 µm von der Wellenleiterebene aufweisen, stellt sich ein nahezu optimaler thermooptischer Wirkungsgrad bei entsprechend guter optischer Qualität ein.

Als besonderer Vorteil anzusehen ist eine weitere Elektrodenstruktur, die sich in ihrer thermischen Wirksamkeit komplementär zur Elektrodenstruktur verhält. Dies begründet sich darin, daß durch diese weitere Elektrodenstruktur der Abstimmbereich der Abstimmvorrichtung vergrößert und gleichzeitig die Steilheit erhöht werden kann.

Werden die beiden Elektrodenstrukturen abwechselnd angesteuert, so daß die über einen gewissen Zeitraum gemessene mittlere Temperatur des Vielstrahlinterferometers in etwa konstant ist, so stellt sich der Vorteil ein, daß das Vielstrahlinterferometer im Mittel keinen häufigen Temperaturwechseln ausgesetzt ist, so daß nur eine geringe thermische Ermüdung oder Alterung resultiert, die außerdem sehr genau berechenbar ist. Zum anderen läßt sich durch die in etwa konstante Temperatur eine präzisere Funktion des Vielstrahlinterferometers, aber ebenso anderer im thermischen Nahbereich zu dem Vielstrahlinterferometer gelegene Bauteile bzw. Schaltungsteile erreichen, da sie auf die zu erwartende, in etwa konstante Temperatur abgestimmt werden können.

Als weiterer Vorteil tritt bei Einsatz einer Hilfselektrodenstruktur auf, daß Abstimmfehler, die insbesondere durch eine gewisse Toleranz bei der Fertigung entstehen können, durch die elektrothermische Einflußnahme mittels der Hilfselektrodenstruktur kompensiert werden können. Zudem ist damit eine Feinabstimmung erreichbar, wodurch die Übersprechdämpfung erhöht wird.

Wenn auf dem Vielstrahlinterferometer eine Ableitelektrodenstruktur aufgebracht wird, die als Wärmesenke dient, so erhöht sich dadurch die Funktionssicherheit des Vielstrahlinterferometers und zudem dessen maximale Umschaltfrequenz.

Weist das Substrat eine geringe Wärmeleitfähigkeit auf, so vermindern sich die Wärmeabstrahlungsverluste im Substrat, und es konzentriert sich der thermooptische Effekt auf die Bereiche unmittelbar an den Elektrodenteilflächen, wodurch ein höherer thermooptischer Wirkungsgrad, eine höhere Abstimmsteilheit und ein genaueres Abstimmverhalten resultieren.

### Zeichnung

Ausführungsbeispiele der Erfindung sind in der Zeichnung dargestellt und in der nachfolgenden Beschreibung näher erläutert.

Es zeigen:
Figur 1 einen Array-Demultiplexer mit einer Elektrodenstruktur,
Figur 2 einen Array-Demultiplexer mit einer Elektrodenstruktur und einer Hilfselektrodenstruktur,
Figur 3 einen Array-Demultiplexer mit einer Elektrodenstruktur und einer weiteren Elektrodenstruktur,
Figur 4 einen Array-Demultiplexer mit einer flächigen Elektrodenstruktur,
Figur 5 einen Gitterspektrographen mit einer flächigen Elektrodenstruktur,
Figur 6 einen Ausschnitt aus einem ausgangsseitigen Sternkoppler mit einer Darstellung des Interferenzspektrums.

### Beschreibung der Ausführungsbeispiele

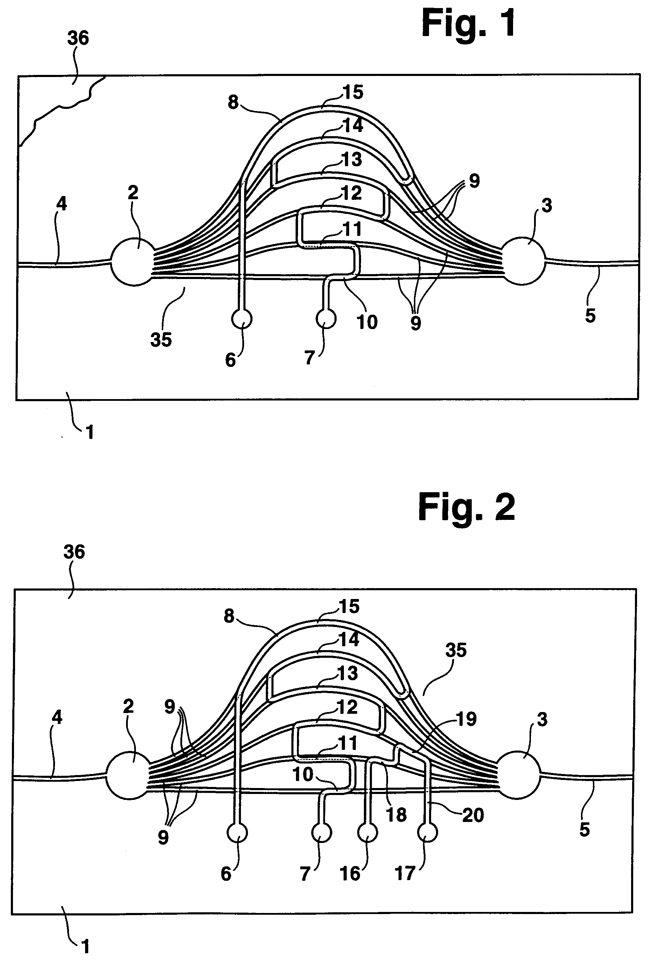

In Figur 1 ist die Draufsicht auf ein scheibenförmiges Substrat 1 dargestellt, das als Trägersubstrat für einen integriert optischen Array-Demultiplexer 35 dient. Der Array-Demultiplexer 35 weist dabei einen Eingangslichtwellenleiter 4 auf, der in einen eingangsseitigen Sternkoppler 2 mündet. Außerdem ist ein Ausgangslichtwellenleiter 5 vorgesehen, der am Ausgang eines ausgangsseitigen Sternkopplers 3 angeordnet ist. Zwischen den beiden Sternkopplern 2, 3 sind mehrere Zwischenlichtwellenleiter 9 angeordnet. Dabei unterscheiden sich die Zwischenlichtwellenleiter 9 in ihrer Länge, und zwar dergestalt, daß jeweils ein zu einem anderen Zwischenlichtwellenleiter 9 benachbarter Zwischenlichtwellenleiter 9 um eine Längendifferenz Δz länger bzw. kürzer ist, als der benachbarte Zwischenlichtwellenleiter 9. Der Eingangslichtwellenleiter 4, der Ausgangslichtwellenleiter 5, die beiden Sternkoppler 2, 3 sowie die Zwischenlichtwellenleiter 9 sind beispielsweise in Form von mit einem Polymerkunststoff gefüllten Lichtwellenleitergräben, welche in das Substrat 1 einstrukturiert wurden, ausgeführt. Dabei weist der Polymerkunststoff, der in den Lichtwellenleitergräben angeordnet ist, einen höheren Brechungsindex auf, als das Substrat 1. Dadurch ist eine ausreichende Lichtführung in den lichtleitenden Teilen des Array-Demultiplexers 35 gewährleistet. Auf der annähernd planen Oberfläche des Substrats 1 ist eine Elektrodenstruktur 8 aufgebracht, die einen ersten Elektrodenanschluß 6 und einen zweiten Elektrodenanschluß 7 aufweist. Außerdem ist über dem kürzesten der Zwischenlichtwellenleiter 9 eine erste Elektrodenteilfläche 10 und über den jeweils längeren Zwischenlichtwellenleitern 9 in aufsteigender Reihenfolge eine zweite Elektrodenteilfläche 11, eine dritte Elektrodenteilfläche 12, eine vierte Elektrodenteilfläche 13, eine fünfte Elektrodenteilfläche 14 und eine sechste Elektrodenteilfläche 15 aufgebracht. Somit ist die sechste Elektrodenteilfläche 15 dem längsten der Zwischenlichtwellenleiter 9 zugeordnet. Ebenso wie die Längen der Zwischenlichtwellenleiter 9 sich voneinander jeweils um die Längendifferenz Δz unterscheiden, sind auch die Elektrodenteilflächen 10, 11, 12, 13, 14, 15 in ihren Längen so dimensioniert, daß sie sich ebenfalls jeweils um eine Längendifferenz Δe voneinander unterscheiden. Dabei besteht zwischen den Längen der Zwischenlichtwellenleiter 9 und den Längen der Elektrodenteilflächen 10, 11, 12, 13, 14, 15 eine streng monotone Relation. Die Elektrodenteilflächen 10, 11, 12, 13, 14, 15 sind untereinander so verbunden, daß sie eine mäanderförmige Elektrodenstruktur 8 bilden, die zwischen den Elektrodenanschlüssen 6, 7 angeordnet ist. Auf der Unterseite weist das Substrat eine Ableitelektrode 36 mit einer hohen Wärmeleitfähigkeit auf, die zur Ableitung der durch die in der Elektrodenstruktur 8 erzeugten Wärme dient. Das Substrat 1 weist eine geringe Wärmeleitfähigkeit auf.

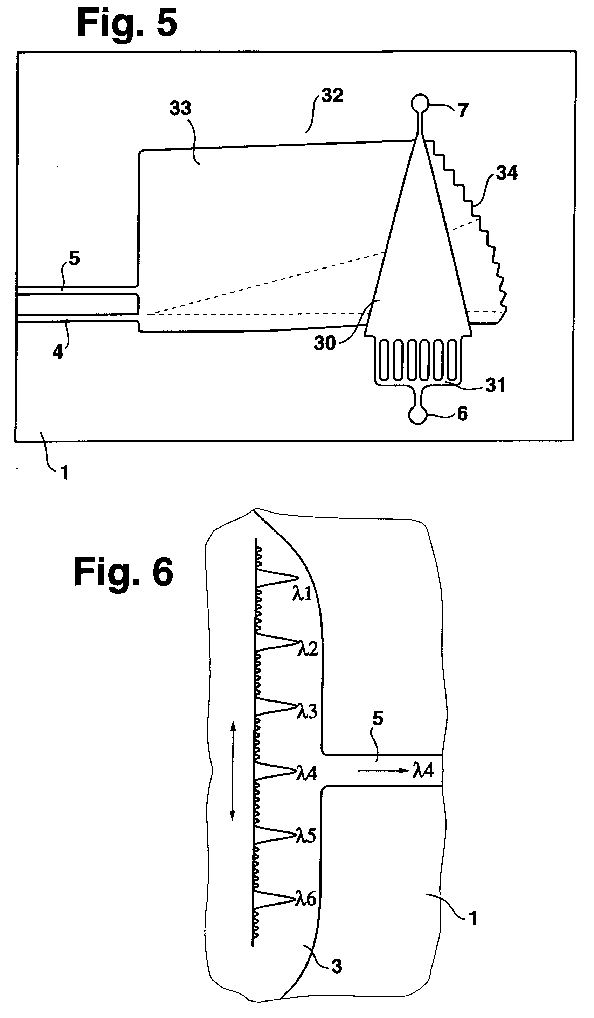

In den Array-Demultiplexer 35 eintretende Lichtwellen werden im eingangsseitigen Sternkoppler 2 durch Ausbreitung in Form einer kreisförmigen Wellenfront gleichmäßig in die Zwischenlichtwellenleiter 9 eingekoppelt. Dabei werden die Moden in den Zwischenlichtwellenleitern 9 alle mit derselben Phase angeregt. Durch die Auftrennung in die einzelnen Zwischenlichtwellenleiter 9 werden die in ihnen geführten Lichtwellen entkoppelt. Durch die Längendifferenzen Δz der einzelnen Zwischenlichtwellenleiter 9 treffen alle in ihnen geführten Lichtwellen, die dieselbe Lichtwellenlänge λ₁ aufweisen, in einer bestimmten Phasenbeziehung zueinander auf den ausgangsseitigen Sternkoppler 3, wo eine Überlagerung der aufeinandertreffenden Lichtwellen mit einheitlicher Lichtwellenlänge λ₁ zu einem Interferenzmuster stattfindet. Dieses Interferenzmuster hat dabei für diese eine Lichtwellenlänge λ₁ ein ausgeprägtes Intensitätsmaximum, welches zu beiden Seiten eine Lichtintensitätsverteilung mit wesentlich geringerer Intensität aufweist. Je größer die Anzahl der Zwischenlichtwellenleiter 9, desto ausgeprägter ist das Intensitätsmaximum gegenüber den seitlichen Überlagerungsmustern. Das Interferenzmuster für Licht einer anderen Wellenlänge λ₂, λ₃, λ₄, λ₅, λ₆ unterscheidet sich aufgrund der mechanisch festgelegten Längendifferenzen Δz der Zwischenlichtwellenleiter 9 in seiner räumlichen Lage. Ein Beispiel für ein solches Interferenzmuster im ausgangsseitigen Sternkoppler 3 zeigt Figur 6.

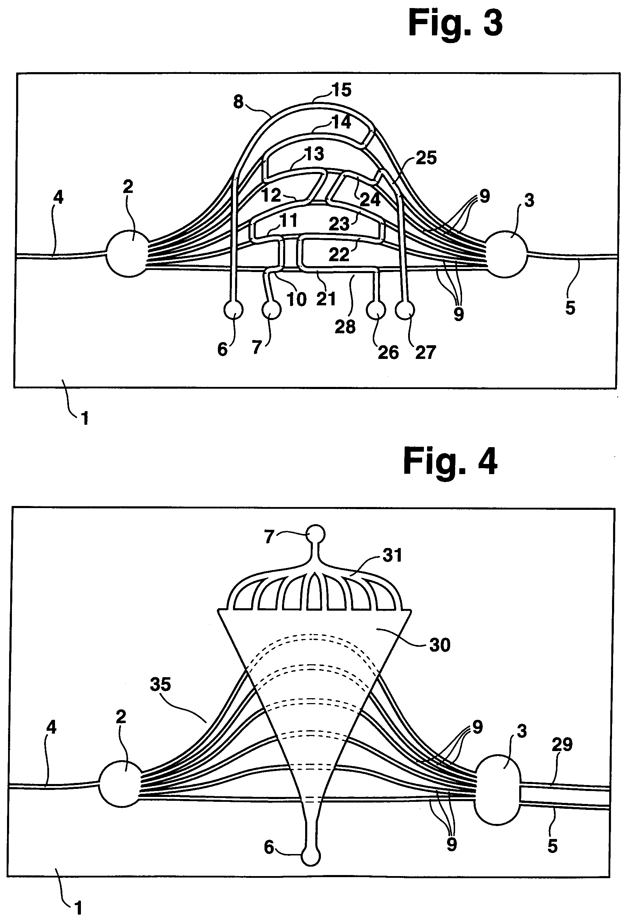

Da am ausgangsseitigen Sternkoppler 3 örtlich fest der einzige Ausgangswellenleiter 5 angeordnet ist, wird in diesen Ausgangswellenleiter 5 nur jene Lichtwellenlänge λ₄ eingekoppelt, deren Intensitätsmaximum gerade örtlich vor dem Ausgangswellenleiter 5 liegt (vgl. Figur 6). Durch Bestromung der Elektrodenstruktur 8 läßt sich aufgrund der elektrischen Verlustleistung in den Elektrodenteilflächen 10, 11, 12, 13, 14, 15 eine thermische Veränderung im Array-Demultiplexer 35 bewirken. Da der Brechungsindex eines Materials stets von seiner Temperatur abhängt, läßt sich durch die Variation der Temperatur der Brechungsindex der Zwischenlichtwellenleiter 9 und damit deren optisch wirksame Länge verändern. Durch diese Veränderung der optisch wirksamen Längen verändern sich auch die Laufwege der Lichtwellen in den Zwischenlichtwellenleitern 9. Dadurch verschiebt sich das Interferenzmuster der Lichtwellen vor dem Ausgangswellenleiter 5. Da sich die Intensitätsmaxima der verschiedenen Lichtwellenlängen λ₁, λ₂, λ₃, λ₄, λ₅, λ₆ nebeneinander befinden, läßt sich somit durch thermische Einflußnahme mittels der Elektrodenstruktur 8 bestimmen, welche Lichtwellenlänge λ₁, λ₂, λ₃, λ₄, λ₅, λ₆ in den Ausgangswellenleiter 5 eingekoppelt wird. Dadurch läßt sich eine thermisch abgestimmte Auswahl von Lichtsignalen treffen, indem das Intensitätsmaximum der entsprechenden Lichtwellenlänge λ₁, λ₂, λ₃, λ₄, λ₅, λ₆ thermisch vor den Ausgangswellenleiter 5 geschoben wird. Durch den monotonen Zusammenhang zwischen der Größe jeder für einen der Lichtwege in der Wellenleiterebene thermisch wirksamen Elektrodenteilfläche 10, 11, 12, 13, 14, 15 und der Länge des jeweiligen Lichtwegs entsteht eine Verstärkung des thermooptischen Effekts im Vergleich zu einer homogenen Temperaturänderung aller Zwischenlichtwellenleiter 9. Diese Auswirkung ist besonders deutlich zu beobachten, wenn zwischen der Längendifferenz der einzelnen Lichtwege und der Flächendifferenz der zugehörigen Elektrodenteilflächen 10, 11, 12, 13, 14 , 15 ein streng monotoner, insbesondere ein linearer Zusammenhang besteht. Zudem wird auf diese Weise erreicht, daß sich die Ausblendcharakteristik des Vielstrahlinterferometers trotz der Abstimmbarkeit nicht wesentlich verschlechtert. Die strenge Monotonie zwischen der Größe jeder für einen der Lichtwege in der Wellenleiterebene thermisch wirksamen Elektrodenteilfläche 10, 11, 12, 13, 14, 15 der Elektrodenstruktur 8 zu der Länge dieses Lichtwegs ist besonders wichtig, da dadurch in einem technisch sinnvollen und realisierbaren Temperaturbereich eine ausreichende Brechungsindexänderung und damit ein ausreichender Interferenzmusterverschiebungsbereich, d.h. ein akzeptabler Abstimmbereich erzielt werden kann. Da die thermische Abstimmung für jedes Material einsetzbar ist und insbesondere nicht von dessen optischen und elektrischen Eigenschaften abhängt, läßt sich ein Material für das Substrat 1 auswählen, das eine hohe thermische Brechungsindexvariationssteilheit aufweist. Dadurch läßt sich der Effekt der erhöhten Steilheit aufgrund der Relation zwischen der Größe jeder für einen der Lichtwege in der Wellenleiterebene thermisch wirksamen Elektrodenteilfläche 10, 11, 12, 13, 14, 15 der Elektrodenstruktur 8 und der Länge dieses Lichtwegs noch verstärken. Es ist zu betonen, daß auch eine monoton fallende Relation zwischen der Größe der Elektrodenteilflächen 10, 11, 12, 13, 14, 15 und der Länge der Lichtwege analog der weiteren Elektrodenstruktur 28 aus Figur 3 vorgesehen ist. Die Auswahl der Relation erfolgt je nach gewünschtem Anwendungsfall und thermischem Abstimmverhalten.

In Figur 2 ist ein weiteres Ausführungsbeispiel dargestellt, bei dem die Numerierung aus Figur 1 beibehalten wurde und das sich von dem in Figur 1 dargestellten Ausführungsbeispiel dadurch unterscheidet, daß zusätzlich eine Hilfselektrodenstruktur 20 vorgesehen ist, die einen ersten Hilfselektrodenanschluß 16 und einen zweiten Hilfselektrodenanschluß 17 aufweist, zwischen denen seriell miteinander verbunden eine erste Hilfselektrodenteilfläche 18 und eine zweite Hilfselektrodenteilfläche 19 angeordnet ist. Die beiden Hilfselektrodenteilflächen 18, 19 liegen dabei je in etwa über einem der Zwischenlichtwellenleiter 9.

Mit dieser Hilfselektrodenstruktur 20 ist es möglich, eine thermische Feinabstimmung vorzunehmen. Ebenso können Phasenfehler, welche zu einer Verzerrung der Interferenzmuster führen, durch eine elektrische Ansteuerung der Hilfselektrodenstruktur 20 verringert werden. Es können selbstverständlich auch mehrere solcher Hilfselektrodenstrukturen 20 angeordnet sein, so daß mehrere Abstimmkorrekturmöglichkeiten bestehen.

Das in Figur 3 dargestellte dritte Ausführungsbeispiel stellt ebenfalls wieder eine abgewandelte Form des in Figur 1 dargestellten Beispiels dar, wobei hier in Figur 3 zusätzlich eine weitere Elektrodenstruktur 28 vorgesehen ist, die zwischen einem weiteren ersten Elektrodenanschluß 26 und einem weiteren zweiten Elektrodenanschluß 27 hintereinander in Reihe geschaltet eine weitere erste Elektrodenteilfläche 21, eine weitere zweite Elektrodenteilfläche 22, eine weitere dritte Elektrodenteilfläche 23, eine weitere vierte Elektrodenteilfläche 24 und eine weitere fünfte Elektrodenteilfläche 25 aufweist. Die weiteren Elektrodenteilflächen 21, 22, 23, 24, 25 weisen ebenfalls unterschiedliche, in diesem Beispiel mit zunehmender Länge des zugehörigen Zwischenlichtwellenleiters 9 streng monoton abnehmende Längen auf, wobei die Elektrodenteilflächen 21, 22, 23, 24, 25 so über den Zwischenlichtwellenleitern 9 angeordnet sind, daß die längste weitere Elektrodenteilfläche 21 gemeinsam mit der kürzesten Elektrodenteilfläche 10 über einem gemeinsamen Zwischenlichtwellenleiter 9 und die kürzeste weitere Elektrodenteilfläche 25 mit der zweitlängsten Elektrodenteilfläche 14 über einem gemeinsamen Zwischenlichtwellenleiter 9 angeordnet ist. Dies bedeutet, daß über nahezu sämtliche Zwischenlichtwellenleiter 9 hinweg betrachtet der Längenverlauf der Elektrodenteilflächen 10, 11, 12, 13 ,14, 15 der Elektrodenstruktur 8 komplementär zu dem Verlauf der weiteren Elektrodenteilflächen 21, 22, 23, 24, 25 der weiteren Elektrodenstruktur 28 verläuft.

Durch diese gegenläufige Anordnung läßt sich der Abstimmbereich der Anordnung erhöhen. Ein Zwischenlichtwellenleiter 9 ist nun nicht nur, wie in Figur 1, mittels der ihm zugeordneten Elektrodenteilfläche 10, 11, 12, 13, 14, 15 zwischen dem Zustand, bei dem die Elektrodenstruktur 8 gar nicht beheizt ist und dem Zustand, bei dem die Elektrodenstruktur 8 mit maximaler Ansteuerleistung beheizt ist, thermisch beeinflußbar, sondern weist gegebenenfalls nun auch noch durch die ihm gleichfalls zugeordnete komplementäre Elektrodenteilfläche 21, 22, 23, 24, 25 die Möglichkeit auf, in einen komplementären Zustand gebracht zu werden, d.h. durch die weitere Elektrodenstruktur 28 beheizt zu werden, was gewissermaßen einer "Kühlung" mittels der Elektrodenteilflächen 10, 11, 12, 13, 14, 15 gleichwirkt. Dadurch läßt sich der Abstimmbereich der Anordnung vergrößern und zusätzlich die Steilheit erhöhen.

Durch eine Verschiebung des thermischen Symmetriepunktes des Nullpunktes, d.h. des Punktes an dem beide Elektrodenstrukturen 8, 28 gar nicht beheizt sind, weg, in etwa zu dem Punkt, bei dem beide Elektrodenstrukturen 8, 28 mit der in etwa halben maximalen Ansteuerleistung beheizt werden, läßt sich mit dieser Art der Bestromung über mehrere Schaltvorgänge die mittlere Temperatur des Vielstrahlinterferometers 35 in etwa konstant halten, wodurch sich thermische Alterungs- und/oder Driftprobleme verringern lassen und außerdem eine in etwa gleichmäßig strahlende thermische Quelle vorliegt, die beim Entwurf eines thermisch an das Vielstrahlinterferometer 35 angekoppelten, optischen oder elektrooptischen Systems berücksichtigt werden kann.

In Figur 4 ist ein weiteres Ausführungsbeispiel dargestellt, bei dem die Elektrodenstruktur 8 aus den Figuren 1 bis 3 durch eine dreieckförmige Elektrodenstruktur 30 ersetzt wurde. Die dreieckförmige Elektrodenstruktur 30 besteht aber in diesem Fall nicht aus einer Serienschaltung einzelner Elektrodenteilflächen, sondern weist eine eine geschlossene Fläche bildende elektrische Verbindung der Elektrodenteilflächen auf, so daß hier keine räumlich strikte Aufteilung der thermischen Wirksamkeit der Elektrodenstruktur 30 erfolgt, im Gegensatz zu den anderen gezeigten Ausführungsbeispielen aus den Figuren 1 bis 3. Um eine möglichst gleichförmige Stromverteilung, insbesondere an der Basis der dreieckigen Elektrodenstruktur 8, zu erreichen, ist zwischen dieser Basis und dem zweiten Elektrodenanschluß 7 ein Kammanschlußelement 31 angebracht, das den elektrischen Ansteuerstrom an mehreren Stellen der Basis nahezu punktfrömig einspeist und dadurch eine gleichmäßigere Stromeinspeisung in die Elektrodenstruktur 30 bewirkt. Des weiteren weist der ausgangsseitige Sternkoppler 3 einen weiteren Ausgangswellenleiter 29 auf. Dadurch können entsprechend Figur 6 gleichzeitig zwei Lichtsignale mit unterschiedlichen Lichtwellenlängen λ₁, λ₂, λ₃, λ₄, λ₅, λ₆ ausgekoppelt werden. Selbstverständlich können auch mehr als zwei Ausgangswellenleiter 5, 29 angeordnet werden.

Dadurch, daß die dreieckförmige Elektrodenstruktur 30 hier die unterschiedlichen Zwischenlichtwellenleiter 9 mit unterschiedlichen Flächenanteilen bedeckt, entspricht diese Elektrodenstruktur 30 in ihrer Wirkung prinzipiell der Elektrodenstruktur 8 aus den Figuren 1 bis 3. Die Herstellung der dreieckförmigen Elektrodenstruktur 30 ist jedoch besonders einfach, da sie ein besonders einfaches Muster aufweist.

In Figur 5 ist ein Substrat 1 dargestellt, bei dem der Eingangswellenleiter 4 und der Ausgangswellenleiter 5 nebeneinander angeordnet sind. Beide Wellenleiter 4, 5 münden in eine Lichtleitebene 33, an deren den Wellenleitern 4, 5 gegenüberliegender Seite ein Reflexionsgitter 34 angeordnet ist. Diese Anordnung stellt einen Gitterspektrographen dar. Auch hier ist eine technische Realisierung möglich, indem der Eingangswellenleiter 4, der Ausgangswellenleiter 5 und die Lichtleitebene 33 mit dem Reflexionsgitter 34 als Vertiefungen im Substrat 1 einstrukturiert werden und anschließend mit einem lichtleitenden Polymerkunststoff, dessen Brechungsindex höher ist als der des Substrats 1, ausgefüllt werden. Über der Lichtleitebene 33 ist quer zum Ausbreitungsweg von aus dem Eingangswellenleiter 4 abgestrahlten Lichtwellen die Elektrodenstruktur 30 angebracht, wie sie bereits zu Figur 4 beschrieben wurde.

Der Gangunterschied zwischen mehreren Lichtwellen einer der Lichtwellenlängen λ₁, λ₂, λ₃, λ₄, λ₅, λ₆, die aus dem Eingangswellenleiter 4 austreten, entsteht hier durch die spezielle Formgebung des Reflexionsgitters 34. Auch hier entsteht ein Interferenzmuster, welches jedoch hier durch Reflexion am Reflexionsgitter 34 auf die Ebene, wo der Eingangswellenleiter 4 liegt, zurückreflektiert wird. Da dort auch der Ausgangswellenleiter 5 angeordnet ist, werden die unmittelbar vor dem Ausgangswellenleiter 5 auftreffenden Lichtwellen in diesen eingekoppelt. Bezüglich der Intensitätsverteilung der einzelnen Lichtwellenlängen λ1, λ 2, λ3, λ4, λ5, λ6 wird noch einmal auf Figur 6 verwiesen, in der dargestellt ist, daß sich die Intensitätsmaxima der einzelnen Lichtwellenlängen λ1, λ2, λ3, λ4, λ5, λ6 durch thermische Abstimmung in Pfeilrichtung verschieben lassen, so daß eine Auswahl der auszukoppelnden Lichtwellenlänge λ1, λ2, λ3, λ4, λ5, λ6 erfolgt, wie es auch bei den Array-Demultiplexern aus den Figuren 1 bis 4 bekannt ist. Die Lichtwege der Lichtwellen (gestrichelte Linien) in der Lichtleitebene 33 sind hier nicht so strikt getrennt, wie beim bereits beschriebenen Array-Demultiplexer 35, wodurch sich die in Form des geschlossenen Dreiecks ausgebildete Elektrodenstruktur 30 besonders für diese Ausgestaltung eignet.

Es ist besonders vorteilhaft, wenn das Substrat 1 nur eine geringe Wärmeleitfähigkeit hat, so daß die auf das Substrat 1 aufgebrachte Wärme mittels der Elektrodenstruktur 8 nicht zu schnell von dem Ort wegfließen kann, wo sie wirksam sein soll. Zum Ausgleich dafür dient die Wärmesenke in Form der Ableitelektrodenstruktur 36, die beispielhaft in der Figur 1 dargestellt ist, die wiederum für ein zügiges Ableiten der Wärme sorgt, die durch das Substrat 1 hindurchgedrungen ist. Dadurch wird die maximale Umschaltfrequenz für die Abstimmvorrichtung erhöht. Als Herstellverfahren für die Elektrodenstrukturen 8, 28, 30, 20 eignet sich ein Photolithographieverfahren, wobei die erzielte Schichtdicke nachträglich galvanisch verstärkt werden kann. Als Dimensionierungsvorschlag eignet sich ein Abstand von ca. 10 bis 50 µm zwischen den Elektrodenstrukturen 8, 28, 30, 20 und der Wellenleiterebene. Dadurch läßt sich ein nahezu optimales Verhältnis einstellen zwischen der thermischen Ankopplung der Wellenleiterebene an die Elektrodenstrukturen 8, 28, 30, 20 und der optischen Qualität des Vielstrahlinterferometers durch möglichst niedrige Dämpfung.

Die dargestellten Ausführungsbeispiele sind in ihren Einzelheiten miteinander kombinierbar. Insbesondere sind für die Elektrodenstrukturen 8, 28, 30, 20 verschiedene Formgebungen möglich, die man je nach gewünschtem Abstimmbereich, Steilheit, Herstellungsaufwand, Wirkungsgrad etc. auswählt.

## Patentansprüche

1. Abstimmvorrichtung für ein integriert optisches Vielstrahlinterferometer mit einer mehrere Lichtwege umfassenden Wellenleiterebene, insbesondere einen Gitterspektrographen oder einen Array-Demultiplexer, mit einer Elektrodenstruktur (8, 30), die nahe der Wellenleiterebene angeordnet ist, dadurch gekennzeichnet, daß die Elektrodenstruktur (8, 30) durch Bestromung für eine Temperaturveränderung in der Wellenleiterebene dient, und daß die Größe jeder für einen der Lichtwege in der Wellenleiterebene thermisch wirksamen Elektrodenteilfläche (10, 11, 12, 13, 14, 15) der Elektrodenstruktur (8, 30) zu der Länge dieses Lichtwegs in einem streng monotonen Zusammenhang steht.

2. Abstimmvorrichtung nach Anspruch 1, dadurch gekennzeichnet, daß zwischen der Längendifferenz der einzelnen Lichtwege und der Flächendifferenz der zugehörigen thermisch wirksamen Elektrodenteilflächen (10, 11, 12, 13, 14, 15) der Elektrodenstruktur ein monotoner, vorzugsweise streng monotoner, insbesondere linearer Zusammenhang besteht.

3. Abstimmvorrichtung nach Anspruch 1, dadurch gekennzeichnet, daß die Elektrodenteilflächen (10, 11, 12, 13, 14, 15) der Elektrodenstruktur (8) miteinander seriell verbunden sind.

4. Abstimmvorrichtung nach Anspruch 1, dadurch gekennzeichnet, daß die Elektrodenstruktur (30) im wesentlichen die Form einer geschlossenen Fläche aufweist, die über wenigstens mehreren der Lichtwege verläuft.

5. Abstimmvorrichtung nach Anspruch 1, dadurch gekennzeichnet, daß die Elektrodenstruktur (8, 30) eine aufgedampfte Metallschicht umfaßt, die photolithographisch strukturiert und galvanisch verstärkt ist.

6. Abstimmvorrichtung nach Anspruch 1, dadurch gekennzeichnet, daß die Elektrodenstruktur (8, 30) einen Abstand von ca. 10 bis 50 µm von der Wellenleiterebene aufweist.

7. Abstimmvorrichtung nach Anspruch 1, dadurch gekennzeichnet, daß wenigstens eine weitere Elektrodenstruktur (28) vorgesehen ist, und daß die Größen der thermisch wirksamen Elektrodenteilflächen (21, 22, 23, 24, 25) der weiteren Elektrodenstruktur (28) umgekehrt proportional zu den Größen der thermisch wirksamen Elektrodenteilflächen (10, 11, 12, 13, 14, 15) der Elektrodenstruktur (8, 30) sind.

8. Abstimmvorrichtung nach Anspruch 1, dadurch gekennzeichnet, daß die weitere Elektrodenstruktur (28) und die Elektrodenstruktur (8, 30) mit einer Bestromung so ansteuerbar sind, daß die über einen gewissen Zeitraum gemessene mittlere Temperatur des Vielstrahlinterferometers in etwa konstant ist.

9. Abstimmvorrichtung nach Anspruch 1, dadurch gekennzeichnet, daß die Elektrodenteilflächen (21, 22, 23, 24, 25) der weiteren Elektrodenstruktur (28) miteinander seriell verbunden sind.

10. Abstimmvorrichtung nach Anspruch 1, dadurch gekennzeichnet, daß die weitere Elektrodenstruktur (28) im wesentlichen die Form einer geschlossenen Fläche aufweist, die über wenigstens mehreren der Lichtwege verläuft.

11. Abstimmvorrichtung nach Anspruch 1, dadurch gekennzeichnet, daß die weitere Elektrodenstruktur (28) eine aufgedampfte Metallschicht umfaßt, die photolithographisch strukturiert und galvanisch verstärkt ist.

12. Abstimmvorrichtung nach Anspruch 1, dadurch gekennzeichnet, daß die weitere Elektrodenstruktur (28) einen Abstand von ca. 10 bis 50 µm von der Wellenleiterebene aufweist.

13. Abstimmvorrichtung nach Anspruch 1, dadurch gekennzeichnet, daß eine Hilfselektrodenstruktur (20) vorgesehen ist, die eine Formgebung aufweist, die zur Kompensation von Abstimmfehlern oder zur Feinabstimmung geeignet ist.

14. Abstimmvorrichtung nach Anspruch 1, dadurch gekennzeichnet, daß die Hilfselektrodenstruktur (20) Hilfselektrodenteilflächen (18, 19) aufweist, die miteinander seriell verbunden sind.

15. Abstimmvorrichtung nach Anspruch 1, dadurch gekennzeichnet, daß die Hilfselektrodenstruktur (20) im wesentlichen die Form einer geschlossenen Fläche aufweist, die über wenigstens mehreren der Lichtwege verläuft.

16. Abstimmvorrichtung nach Anspruch 1, dadurch gekennzeichnet, daß die Hilfselektrodenstruktur (20) eine aufgedampfte Metallschicht umfaßt, die photolithographisch strukturiert und galvanisch verstärkt ist.

17. Abstimmvorrichtung nach Anspruch 1, dadurch gekennzeichnet, daß die Hilfselektrodenstruktur (20) einen Abstand von ca. 10 bis 50 µm von der Wellenleiterebene aufweist.

18. Abstimmvorrichtung nach Anspruch 1, dadurch gekennzeichnet, daß auf dem Vielstrahlinterferometer eine Ableitelektrodenstruktur (36) aufgebracht ist, die als Wärmesenke dient.

19. Abstimmvorrichtung nach Anspruch 1, dadurch gekennzeichnet, daß das Vielstrahlinterferometer ein Substrat (1) umfaßt, das eine geringe Wärmeleitfähigkeit aufweist.
